# EUROPÄISCHE PATENTANMELDUNG

(11) **EP 1 442 954 A1**
(43) Veröffentlichungstag der Anmeldung: **04.08.2004**
(21) Anmeldenummer: 04001574.5
(22) Anmeldetag: 26.01.2004
(51) Int. Cl.: B61D 27/00, B60H 1/00

(54) **Klimaanlage für den Innenraum eines Fahrzeugs**

(30) Priorität: 03.02.2003 DE 10304272
(71) Anmelder: SIEMENS AKTIENGESELLSCHAFT, 80333 München (DE)
(72) Erfinder: Krause, Robert, 91052 Erlangen (DE)

(57) **Zusammenfassung**

Die Erfindung betrifft eine Klimaanlage für den Innenraum eines Fahrzeugs, insbesondere eines Straßenbahnfahrzeugs. Es ist vorgesehen, dass mit einem Klimagerät zum wahlweisen Erzeugen eines gekühlten oder erwärmten Luftstromes über eine Regeleinrichtung ein erstes Kanalsystem mit Zuströmöffnungen im Bereich der Decke des Innenraums und ein zweites Kanalsystem mit Zuströmöffnungen im Bereich des Bodens des Innenraumes verbunden sind. Die Regelung des Luftstromes erfolgt beispielsweise in Abhängigkeit von der Außentemperatur.

## Beschreibung

Die Erfindung betrifft eine Klimaanlage für den Innenraum eines Fahrzeugs, insbesondere eines Straßenbahnfahrzeugs.

Zur Luftzufuhr in den Fahrgastraum von Straßenbahnfahrzeugen sind bisher bereits Kanalsysteme verwendet worden. Zum Heizen wurden bisher entweder sogenannte Untersitzheizgeräte eingesetzt, oder es wurde erwärmte Luft über Bodenkanäle verteilt.

Eine bedarfsgerechte Klimatisierung ist mit den bekannten Maßnahmen nicht immer gegeben.

Der Erfindung liegt die Aufgabe zugrunde, eine Klimaanlage anzugeben, die selbst bei extremen Außentemperaturwerten eine gute Kühlung bzw. Heizung des Innenraumes stets gewährleistet.

Die Aufgabe wird gemäß der Erfindung dadurch gelöst, dass mit einem Klimagerät zum wahlweisen Erzeugen eines gekühlten oder erwärmten Luftstromes über eine Regeleinrichtung ein erstes Kanalsystem mit Zuströmöffnungen im Bereich der Decke des Innenraumes und ein zweites Kanalsystem mit Zuströmöffnungen im Bereich des Bodens des Innenraumes verbunden sind.

Damit wird der Vorteil erzielt, dass einerseits mit nur einem Klimagerät Luft sowohl von oben als auch von unten in den Innenraum des Fahrzeugs eingeleitet werden kann und dass andererseits die zuströmende Luft in geeigneter Weise verteilt werden kann. Es ist möglich, gleich große Luftströme von oben und von unten in den Innenraum gelangen zu lassen. Es ist aber auch möglich, einen größeren Anteil des Luftstromes von oben oder von unten einströmen zu lassen.

Das Klimagerät enthält beispielsweise einen Ventilator. Zum Erzeugen erwärmter Luft kann es mit einer Heizvorrichtung ausgestattet sein. In einer bevorzugten Ausführungsform besteht das erste Kanalsystem aus nur einen Deckenkanal, während des zweite Kanalsystem aus zwei Bodenkanälen besteht, die am Boden an den Seitenwänden entlang angeordnet sind.

Von der Regeleinrichtung gehen beispielsweise das erste und das zweite Kanalsystem über regelbare Klappen aus. Durch entsprechende Einstellungen dieser Klappen kann der vom Klimagerät kommende Luftstrom in gewünschter Weise auf die beiden Kanalsysteme verteilt werden.

Die Stellung der Klappen ist beispielsweise in Abhängigkeit von der Außentemperatur regelbar. Die Klappen können dazu mit Stellvorrichtungen und einem Regler verbunden sein, der mit einem Außentemperatursensor verbunden ist.

Es wird der Vorteil erzielt, dass die Klimatisierung besser als bisher auf die Außentemperatur abgestimmt werden kann.

Beispielsweise sind die Stellungen der Klappen so regelbar, dass bei niedriger Außentemperatur zum Heizen des Innenraums mehr als die Hälfte des Luftstroms durch das zweite Kanalsystem führbar ist. Besonders vorteilhaft ist dann, wenn 70 % des Luftstromes (Volumenstrom) durch das zweite Kanalsystem im Bodenbereich und nur 30 % durch das erste Kanalsystem im Deckenbereich geleitet werden. Durch die aufsteigende warme Luft wird eine optimale Beheizung möglich.

Beispielsweise sind die Stellungen der Klappen so regelbar, dass bei hoher Außentemperatur zum Kühlen des Innenraums mehr als die Hälfte des Luftstromes durch das erste Kanalsystem führbar ist. Auch hierbei können 70 % des Luftstromes (Volumenstrom) durch ein Kanalsystem, hierbei aber das erste Kanalsystem im Deckenbereich, fließen. Die absinkende kühle Luft verbessert vorteilhafterweise die Klimatisierung des Innenraumes.

Besonders vorteilhaft ist eine Kombination aus beiden Regelungsvorgaben, so dass jede Verteilung des vom Klimagerät erzeugten Luftstromes auf die beiden Kanalsysteme möglich wird. Es ist jedoch besonders vorteilhaft, wenn zum Heizen der größere Anteil des Luftvolumens in das zweite Kanalsystem und zum Kühlen der größere Anteil des Luftstromes in das erste Kanalsystem gelangt.

Mit der Klimaanlage nach der Erfindung wird insbesondere der Vorteil erzielt, dass die gewünschte Innenraumtemperatur zuverlässig erreicht wird.

## Patentansprüche

1. Klimaanlage für den Innenraum eines Fahrzeugs, insbesondere eines Straßenbahnfahrzeugs,
**dadurch gekennzeichnet, dass** mit einem Klimagerät zum wahlweisen Erzeugen eines gekühlten oder erwärmten Luftstromes über eine Regeleinrichtung ein erstes Kanalsystem mit Zuströmöffnungen im Bereich der Decke des Innenraumes und ein zweites Kanalsystem mit Zuströmöffnungen im Bereich des Bodens des Innenraumes verbunden sind.

2. Klimaanlage nach Anspruch 1,
**dadurch gekennzeichnet, dass** von der Regeleinrichtung das erste und das zweite Kanalsystem über regelbare Klappen ausgehen.

3. Klimaanlage nach Anspruch 2,
**dadurch gekennzeichnet, dass** die Stellungen der Klappen in Abhängigkeit von der Außentemperatur regelbar sind.

4. Klimaanlage nach Anspruch 3,
**dadurch gekennzeichnet, dass** die Stellungen der Klappen so regelbar sind, dass bei niedriger Außentemperatur zum Heizen mehr als die Hälfte des Luftstroms durch das zweite Kanalsystem führbar ist.

5. Klimaanlage nach einem der Ansprüche 3 oder 4,
**dadurch gekennzeichnet, dass** die Stellungen der Klappen so regelbar sind, dass bei hoher Außentemperatur zum Kühlen mehr als die Hälfte des Luftstroms durch das erste Kanalsystem führbar ist.
